# EUROPEAN PATENT APPLICATION

(11) **EP 4 328 282 A1**
(43) Date of publication of application: **28.02.2024**
(21) Application number: 22820163.8
(22) Date of filing: 03.06.2022
(51) Int. Cl.: C09K 3/00, B65D 65/42, C09D 5/02, C09D 201/02, D21H 19/10, D21H 21/14

(54) **OIL-RESISTANT AGENT AND PAPER PRODUCT**

(30) Priority: 09.06.2021 JP 2021096587
(71) Applicant: Daikin Industries, Ltd., Osaka-shi, Osaka 530-0001 (JP)
(72) Inventor: SAKAMAKI, Tatsunori, Osaka-shi, Osaka 530-8323 (JP); AKUTA, Ryo, Osaka-shi, Osaka 530-8323 (JP); MATSUMOTO, Akane, Osaka-shi, Osaka 530-8323 (JP); AIHARA, Marina, Osaka-shi, Osaka 530-8323 (JP); HIGASHI, Masahiro, Osaka-shi, Osaka 530-8323 (JP); AOYAMA, Hirokazu, Osaka-shi, Osaka 530-8323 (JP); KISHIKAWA, Yosuke, Osaka-shi, Osaka 530-8323 (JP)
(74) Representative: Hoffmann Eitle
(86) International application number: PCT/JP2022/022651
(87) International publication number: WO 2022/259982

(57) **Abstract**

The present invention imparts, to a paper product, oil resistance against a liquid oil, by means of an oil-resistant agent comprising a polymer (A) obtained by modifying, with an aliphatic hydrocarbon group (a2) which has 1-40 carbon atoms, a polymer (a1) that comprises at least one selected from the group consisting of a hydroxyl group and an amino group.

## Description

### Field of Invention

The present invention relates to an oil-resistant agent, particularly an oil-resistant agent that can be suitably used for a paper product.

### Background Art

In recent years, paper packaging materials and containers have been expected to replace disposable plastic packaging materials and containers. Food packaging materials and food containers made of paper are required to prevent permeation of moisture and oil of foods, so that an oil-resistant agent is applied to the paper by internal or external addition.

PTL1 discloses a water repellent excellent in water-repellency, which is an adduct of a vinyl polymer having at least one substituent selected from the group consisting of a hydroxyl group, an amino group and an imino group (a), and an isocyanate having an aliphatic group having 8 or more carbon atoms (b).

### Citation List

### Patent Literatures

PTL1: International Publication No. WO/2020/022367

### Summary of Invention

### Technical Problem

In PTL1, there is no description on imparting resistance against liquid oils to paper products. The resistance against liquid oils of a paper product is an important property for the paper product intended for use in food applications (e.g., food packaging materials). An object of the present disclosure is to provide an oil-resistant agent capable of imparting resistance against liquid oils to a paper product.

### Solution to Problem

Preferred aspects of the present disclosure are as follows.

### [Item 1]

An oil-resistant agent comprising a polymer (A) in which a polymer (a1) having at least one selected from the group consisting of a hydroxyl group and an amino group is modified with an aliphatic hydrocarbon group having 1 to 40 carbon atoms (a2).

### [Item 2]

The oil-resistant agent according to item 1, wherein the aliphatic hydrocarbon group (a2) has 7 or more carbon atoms.

### [Item 3]

The oil-resistant agent according to item 1 or 2, wherein the polymer (a1) and the aliphatic hydrocarbon group (a2) are bonded through at least one bond selected from the group consisting of a urethane bond, a urea bond, an ester bond, an amide bond, and an ether bond.

### [Item 4]

The oil-resistant agent according to any one of items 1 to 3, wherein the polymer (a1) is at least one selected from the group consisting of polyvinyl alcohol, an ethylene-vinyl alcohol copolymer, a vinyl acetate-vinyl alcohol copolymer, an ethylene-vinyl acetate-vinyl alcohol copolymer, polyvinyl amine, and a vinylamine-vinyl alcohol copolymer.

### [Item 5]

The oil-resistant agent according to any one of items 1 to 4, wherein a total amount of vinyl alcohol units and vinylamine units in all repeating units of the polymer (a1) is 40 mol% or more.

### [Item 6]

The oil-resistant agent according to any one of items 1 to 5, wherein a ratio of modification of the polymer (A) with the aliphatic hydrocarbon group (a2) is 25 mol% or more and 100 mol% or less relative to a total amount of hydroxyl groups and amino groups of the polymer (a1) .

### [Item 7]

The oil-resistant agent according to any one of items 1 to 6, wherein the polymer (A) is a non-fluorine polymer.

### [Item 8]

The oil-resistant agent according to any one of items 1 to 7, further comprising water, an organic solvent, or a mixture of water and an organic solvent, and being a dispersion or solution.

### [Item 9]

The oil-resistant agent according to any one of items 1 to 8, further comprising at least one selected from a polysaccharide, a paper strengthening agent, a flocculant, a yield improver, and a coagulant.

### [Item 10]

The oil-resistant agent according to any one of items 1 to 9, which is used for a paper product.

### [Item 11]

The oil-resistant agent according to item 10, wherein the paper product is a food packaging material or a food container.

### [Item 12]

A paper product treated with the oil-resistant agent according to any one of items 1 to 11.

### [Item 13]

The paper product according to item 12, which is a food packaging material or a food container.

### [Item 14]

An oil-resistant agent comprising a polymer (A) in which a polymer (a1) having at least one selected from the group consisting of a hydroxyl group and an amino group is modified with an aliphatic hydrocarbon group having 1 to 40 carbon atoms(a2), wherein the polymer (a1) and the aliphatic hydrocarbon group (a2) are bonded through an ester bond.

### Advantageous Effect of Invention

The oil-resistant agent in the present disclosure can impart resistance against liquid oils to a paper product.

### Detailed Description of the Invention

### <Oil-resistant agent>

An oil-resistant agent imparts resistance against oils to a substrate by treatment of the substrate with the oil-resistant agent. The substrate with oil resistance imparted has a property of preventing oil stains, and for example, may further have oil-repellency or antifouling property. The term "oil" as used herein refers to fats and oils and an organic solvent. Examples of the fats and oils include edible fats and oils (vegetable fatty oil, animal fatty oil, vegetable fat and animal fat) and an industrial fats and oils. Examples of the edible fats and oils include salad oil, corn oil, sesame oil, rapeseed oil, and olive oil. Examples of the industrial fats and oils include castor oil. The organic solvent may be a polar solvent or a nonpolar solvent. Examples of the nonpolar solvent include hexane and hexadecane, though not limited thereto. The oil may contain at least fats and oils. The oil-resistant agent may impart water resistance and/or water-repellency to the substrate through treatment of the substrate.

The oil-resistant agent may contain a liquid medium (water, an organic solvent, or a mixed solution thereof) in addition to the polymer (A) (which may be, for example, a non-fluorine polymer). The oil-resistant agent may further contain at least one selected from the group consisting of a surfactant, a dispersant and an additive.

### [Polymer (A)]

The oil-resistant agent in the present disclosure comprises a polymer (A). In the polymer (A), a polymer (a1) containing a hydroxyl group or an amino group is modified with an aliphatic hydrocarbon group having 1 to 40 carbon atoms (a2). Here, modifying the polymer (a1) with the aliphatic hydrocarbon group (a2) means chemically bonding the aliphatic hydrocarbon group (a2) to the polymer (a1). That is, the polymer (A) includes the polymer (a1) and the aliphatic hydrocarbon group (a2) which are chemically bonded.

### (Polymer (a1))

The polymer (a1) has at least one selected from the group consisting of a hydroxyl group and an amino group. The polymer (a1) may have a hydroxyl group alone, an amino group alone, or both of hydroxyl group and amino group, and may additionally have a functional group such as a carboxyl group. The polymer (a1) may be a synthetic polymer or a natural polymer, and examples thereof include a vinyl polymer obtained by polymerizing a monomer having a vinyl group CH₂=CH- or a vinylidene group CH₂=C=. The polymer (a1) may be an acrylic polymer having a repeating unit derived from an acrylic monomer, but is not necessarily an acrylic polymer. The polymer (a1) is a thermosetting resin or a thermoplastic resin, and preferably a thermoplastic resin.

The polymer (a1) may be a polyvinyl alcohol having a vinyl alcohol unit. The vinyl alcohol unit is a repeating unit represented by the following formula:

-(-CH₂-CHOH-)-

The polyvinyl alcohol is produced, for example, by saponification of polyvinyl acetate.

The polymer (a1) may have a vinyl acetate unit. The vinyl acetate unit is a repeating unit represented by the following formula:

-(-CH₂-CH(OCOCH₃)-)-

The polymer (a1) may have both of a vinyl alcohol unit and a vinyl acetate unit, and may be a vinyl acetate-vinyl alcohol copolymer.

The repeating units which the polymer (a1) has are not limited to the vinyl alcohol unit and the vinyl acetate unit, and the polymer (a1) may have an ethylene unit, a vinylamine unit, or the like. The repeating units which the polymer (a1) may have are not limited, and the polymer (a1) may have other repeating units derived from a vinyl monomer or an acrylic monomer.

The amount of the vinyl alcohol unit in all repeating units of the polymer (a1) may be 10 mol% or more, 20 mol% or more, 30 mol% or more, 40 mol% or more, 50 mol% or more, 60 mol% or more, 70 mol% or more, 80 mol% or more, 90 mol% or more, or 95 mol% or more, preferably 60 mol % or more. The amount of the vinyl alcohol unit in all repeating units of the polymer (a1) may be 100 mol% or less, 95 mol% or less, 85 mol% or less, 75 mol% or less, 65 mol% or less, 55 mol% or less, 45 mol% or less, 35 mol% or less, 25 mol% or less, 15 mol% or less, or 10 mol% or less.

The degree of saponification (Number of vinyl alcohol units/Total number of vinyl alcohol units and vinyl acetate units) in the polymer (a1) may be 10 mol% or more, 20 mol% or more, 30 mol% or more, 40 mol% or more, 50 mol% or more, 60 mol% or more, 70 mol% or more, 80 mol% or more, 90 mol% or more, or 95 mol% or more, preferably 60 mol% or more. The degree of saponification in the polymer (a1) may be 100 mol% or less, 95 mol% or less, 85 mol% or less, 75 mol% or less, 65 mol% or less, 55 mol% or less, 45 mol% or less, 35 mol% or less, 25 mol% or less, 15 mol% or less, or 10 mol% or less.

The amount of the ethylene unit in all repeating units of the polymer (a1) may be 5 mol% or more, 10 mol% or more, 15 mol% or more, 20 mol% or more, 25 mol% or more, 30 mol% or more, 35 mol% or more, 40 mol% or more, 45 mol% or more, or 50 mol% or more. The total amount of the ethylene unit in all repeating units of the polymer (a1) may be 60 mol% or less, 55 mol% or less, 50 mol% or less, 45 mol% or less, 40 mol% or less, 35 mol% or less, 30 mol% or less, 25 mol% or less, 20 mol% or less, 15 mol% or less, or 10 mol% or less.

The amount of the vinylamine unit in all repeating units of the polymer (a1) may be 5 mol% or more, 10 mol% or more, 15 mol% or more, 20 mol% or more, 25 mol% or more, 30 mol% or more, 35 mol% or more, 40 mol% or more, 45 mol% or more, or 50 mol% or more. The total amount of the ethylene unit in all repeating units of the polymer (a1) may be 60 mol% or less, 55 mol% or less, 50 mol% or less, 45 mol% or less, 40 mol% or less, 35 mol% or less, 30 mol% or less, 25 mol% or less, 20 mol% or less, 15 mol% or less, or 10 mol% or less.

The total amount of the vinyl alcohol unit and vinylamine unit in all repeating units of the polymer (a1) may be 10 mol% or more, 20 mol% or more, 30 mol% or more, 40 mol% or more, 50 mol% or more, 60 mol% or more, 70 mol% or more, 80 mol% or more, 90 mol% or more, or 95 mol% or more, preferably 40 mol% or more. The total amount of the vinyl alcohol unit and vinylamine unit in all repeating units of the polymer (a1) may be 100 mol% or less, 95 mol% or less, 85 mol% or less, 75 mol% or less, 65 mol% or less, 55 mol% or less, 45 mol% or less, 35 mol% or less, 25 mol% or less, 15 mol% or less, or 10 mol% or less.

Specific examples of the polymer (a1) include polyvinyl alcohol, an ethylene-vinyl alcohol copolymer, a vinyl acetate-vinyl alcohol copolymer, an ethylene-vinyl acetate-vinyl alcohol copolymer, polyvinyl amine, and a vinylamine-vinyl alcohol copolymer.

The weight average molecular weight of the polymer (a1) may be 1,000 or more, 3,000 or more, 5,000 or more, 7,500 or more, 10,000 or more, 30,000 or more, 100,000 or more, 300,000 or more, or 500,000 or more. The weight average molecular weight of the polymer (a1) may be 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, or 50,000 or less.

### (Aliphatic hydrocarbon group (a2))

The number of carbon atoms in the aliphatic hydrocarbon group (a2) may be 1 or more, 3 or more, 5 or more, 7 or more, 10 or more, 12 or more, 14 or more, 16 or more, 18 or more, or 20 or more, and preferably 7 or more, 10 or more, or 12 or more. The number of carbon atoms in the aliphatic hydrocarbon group (a2) may be 40 or less, 35 or less, 30 or less, 25 or less, 22 or less, 20 or less, or 18 or less. The number of carbon atoms is preferably 30 or less.

The aliphatic hydrocarbon group (a2) is preferably a monovalent aliphatic hydrocarbon group. The aliphatic hydrocarbon group (a2) may be linear, branched, or cyclic, and preferably linear. The aliphatic hydrocarbon group (a2) may be unsaturated (e.g., mono-unsaturated, di-unsaturated, tri-unsaturated, tetra-unsaturated or poly-unsaturated) or saturated, and may be, for example, an alkyl group.

Specific examples of the aliphatic hydrocarbon group (a2) include an alkyl group such as n-propyl, an isopropyl group, a n-butyl group, a t-butyl group, a neopentyl group, an octyl group, a tridecyl group, a tetradecyl group, a pentadecyl group, a lauryl group, a palmityl group, a heptadecyl group, a stearyl group, a behenyl group, a 2-ethylhexyl group and an isostearyl group; and an alkenyl group such as an oleyl group, a palmitoyl group and an eicosenyl group.

### (Polyorganosiloxane group (a3))

It is also possible to use a polyorganosiloxane group (a3) instead of the aliphatic hydrocarbon group (a2), or in combination with the aliphatic hydrocarbon groups (a2). The polyorganosiloxane group (a3) is a group formed by bonding polyorganosiloxane to the polymer (a1), and preferably a monovalent group. The method of bonding the polyorganosiloxane and the polymer (a1) is not limited, and the bonding may be made through a reactive group of the polyorganosiloxane.

A polyorganosiloxane may have a chemical structure represented by the following formula:

-(R₂SiO)ₙ-

wherein R each are independently a monovalent organic group and n is 1 to 10,000.

For example, R may be an organic group having an alkyl group having 1 to 12 carbon atoms (e.g., 1 to 4 carbon atoms) or a functional group (e.g., a hydroxyl group, an amino group, a mercapto group, an epoxy group, a carboxyl group, a halogen-substituted alkyl group, a vinyl group, a (meth)acrylate group and a (meth)acrylamide group). For example, n may be 1 or more, 2 or more, 10 or more, 30 or more, or 100 or more, and may be 10,000 or less, 5,000 or less, 1,000 or less, or 500 or less. The terminal structure of polyorganosiloxane may be a hydrogen atom, an alkyl group, a hydroxyl group, a silanol group, or a trialkylsilyl group.

### [Composition or the like of polymer (A)]

The ratio of modification of the polymer (A) with the aliphatic hydrocarbon group (a2) may be, relative to the total amount of the hydroxyl groups and the amino groups of the polymer (a1), 5 mol% or more, 10 mol% or more, 15 mol% or more, 20 mol% or more, 25 mol% or more, 30 mol% or more, 35 mol% or more, 40 mol% or more, 45 mol% or more, or 50 mol % or more, and preferably 25 mol% or more. The ratio of modification of the polymer (A) with the aliphatic hydrocarbon group (a2) may be, relative to the total amount of the hydroxyl groups and the amino groups of the polymer (a1), 100 mol% or less, 90 mol% or less, 80 mol% or less, 70 mol% or less, 60 mol% or less, or 50 mol% or less.

In the case where the polymer (A) has a polyorganosiloxane group (a3) instead of the aliphatic hydrocarbon group (a2), the ratio of modification with the polyorganosiloxane group (a3) may be, relative to the total amount of the hydroxyl groups and the amino groups of the polymer (a1), 0.1 mol% or more, 1 mol% or more, 3 mol% or more, 5 mol% or more, 10 mol% or more, or 25 mol% or more, and may be, relative to the total amount of the hydroxyl groups and the amino groups of the polymer (a1), 50 mol% or less, 30 mol% or less, 15 mol% or less, 10 mol% or less, or 5 mol % or less. In the case where the polymer (A) has both of the aliphatic hydrocarbon group (a2) and the polyorganosiloxane group (a3), the ratio of modification with the polyorganosiloxane group (a3) may be 0.01 times or more, 0.1 times or more, or 0.3 times or more the ratio of modification with the aliphatic hydrocarbon group (a2), and 3 times or less, 1 time or less, or 0.5 times or less the ratio of modification with the aliphatic hydrocarbon group (a2).

The polymer (A) does not necessarily have a fluoroalkyl group (particularly a perfluoroalkyl group) having 1 or more, 3 or more, 6 or more, or 8 or more carbon atoms. The polymer (A) may be a non-fluorine polymer, which has no fluorine atoms. The oil-resistant agent in the present disclosure can exhibit good oil resistance without use of a polymer having a fluoroalkyl group or a fluorine atom.

The weight average molecular weight of the polymer (A) may be 1,000 or more, 3,000 or more, 5,000 or more, 7,500 or more, 10,000 or more, 30,000 or more, 100,000 or more, 300,000 or more, or 500,000 or more. The weight average molecular weight of the polymer (A) may be 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, or 50,000 or less.

### [Property of polymer (A)]

The contact angle of n-hexadecane for the polymer (A) (on a glass substrate) may be 5° or more, 10° or more, or 15° or more, preferably 20° or more, 25° or more, or 30° or more, more preferably 35° or more, 40° or more, or 45° or more. With a contact angle of n-hexadecane in the above range, the oil-resistant agent has excellent liquid repellency, being particularly preferable from the viewpoint of oil resistance. Here, the contact angle may be measured by the method described in Example. Specifically, the contact angle may be a static contact angle obtained by spin-coating a chloroform solution having a polymer (A) concentration of 1.0% on a glass substrate with a cellophane film attached, and then dropping 2 µL of hexadecane (HD) on the resulting coating film, followed by measuring the contact angle one second after droplet deposition.

The melting point of the polymer (A) is preferably 40°C or more, 50°C or more, 60°C or more, 70°C or more, 80°C or more, 90°C or more, 100°C or more, 120°C or more, or 140°C or more. Further, the melting point of the polymer (A) is preferably 200°C or less, 180°C or less, or 160°C or less. With a melting point of the polymer (A) in the above range, the coatability and temperature resistance of a resulting textile product are improved, and the melting point in the range is particularly preferred from the viewpoint of oil resistance and the like.

The glass transition temperature of the polymer (A) is preferably 30°C or more, 40°C or more, 50°C or more, 60°C or more, 70°C or more, 80°C or more, 90°C or more, or 100°C or more. Further, the glass transition temperature of the polymer (A) is preferably 140°C or less, 130°C or less, or 120°C or less. With a glass transition temperature of the polymer (A) in the above range, the coatability and temperature resistance of a resulting textile product are improved, and the glass transition temperature in the range is particularly preferred from the viewpoint of oil resistance and the like.

### [Amount of polymer (A)]

The amount of the polymer (A) relative to the oil-resistant agent may be 0.1 wt.% or more, 1 wt.% or more, 3 wt.% or more, 5 wt.% or more, 10 wt.% or more, 25 wt.% or more, 50 wt.% or more, or 75 wt.% or more. The amount of the polymer (A) relative to the oil-resistant agent may be 100 wt.% or less, 95 wt.% or less, 75 wt.% or less, 50 wt.% or less, or 25 wt.% or less.

### [Production method of polymer (A)]

The polymer (A) can be produced by modifying the polymer (a1) with an aliphatic hydrocarbon group (a2). The method for modifying the polymer (a1) with the aliphatic hydrocarbon group (a2) is not limited. For example, a method such as a urethane bond-forming reaction, a urea bond-forming reaction, an ester bond-forming reaction, an amide bond-forming reaction, and an ether bond-forming reaction can be used. That is, the polymer (a1) and the aliphatic hydrocarbon group (a2) may be bonded by at least one bond selected from the group consisting of a urea bond, a urethane bond, an ester bond, an amide bond, and an ether bond. In the bond-forming reaction, an acylating agent, a condensing agent, a catalyst and the like are appropriately used.

For example, modification of the aliphatic hydrocarbon group (a2) to the polymer (a1) may be performed by reacting a functional group (hydroxyl group or amino group) of the polymer (a1) with an aliphatic hydrocarbon group-containing reactant. Here, the "aliphatic hydrocarbon group-containing reactant" is a compound having a group capable of reacting with the aliphatic hydrocarbon group (a2) and the functional group of the polymer (a1).

Examples of the aliphatic hydrocarbon group-containing reactant are as follows.

H₂N-R

HO-R

HO(O=)C-R

X(O=)C-R

RC(=O)OC(=O)R

O=C=N-R

S=C=N-R

(CH₂OCH)CH₂OR

X-R

wherein R each are independently an aliphatic hydrocarbon group (a2), and X is F, Cl, Br, or I.

### (Formation of urethane bond)

In the polymer (A), the polymer (a1) and the aliphatic hydrocarbon group (a2) may be bonded through a urethane bond. The urethane bond in the polymer (A) may be formed by, for example, reacting the hydroxyl group-containing polymer (a1) with an aliphatic hydrocarbon-containing isocyanate. A tin catalyst or an amine can be used as a catalyst during the reaction. For example, the hydroxyl group-containing polymer (a1) and an aliphatic hydrocarbon group-containing isocyanate are reacted in an organic solvent for a certain period of time to cause a reaction between the hydroxyl group and the isocyanate group, so that a polymer (A) in which the polymer (a1) and the aliphatic hydrocarbon group (a2) are bonded through a urethane bond can be obtained.

### (Formation of urea bond)

In the polymer (A), the polymer (a1) and the aliphatic hydrocarbon group (a2) may be bonded through a urea bond. The urea bond in the polymer (A) may be formed by, for example, reacting the amino group-containing polymer (a1) with an aliphatic hydrocarbon group-containing isocyanate group. Alternatively, a catalyst may be used appropriately during the reaction. For example, the amino group-containing polymer (a1) and an aliphatic hydrocarbon-containing isocyanate are reacted in an organic solvent for several hours to cause a reaction between the amino group and the isocyanate group, so that a polymer (A) in which the polymer (a1) and the aliphatic hydrocarbon group (a2) are bonded through a urea bond can be obtained.

### (Formation of ester bond)

In the polymer (A), the polymer (a1) and the aliphatic hydrocarbon group (a2) may be bonded through an ester bond. The ester bond in the polymer (A) may be formed, for example, by reacting the hydroxyl group-containing polymer (a1) with an aliphatic hydrocarbon group-containing carboxylic acid. Alternatively, an acylation catalyst, a condensing agent, or the like may be used during the reaction. For example, the hydroxyl group-containing polymer (a1) and an aliphatic hydrocarbon group-containing carboxylic acid are reacted in an organic solvent for several hours to cause a reaction between the hydroxyl group and the carboxylic acid, so that a polymer (A) in which the polymer (a1) and the aliphatic hydrocarbon group (a2) are bonded through an ester bond can be obtained.

### (Formation of amide bond)

In the polymer (A), the polymer (a1) and the aliphatic hydrocarbon group (a2) may be bonded through an amide bond. The amide bond in the polymer (A) may be formed, for example, by reacting the amino group-containing polymer (a1) with an aliphatic hydrocarbon group-containing carboxylic acid. Alternatively, an acylation catalyst, a condensing agent, or the like may be used during the reaction. For example, the amino group-containing polymer (a1) and an aliphatic hydrocarbon group-containing carboxylic acid are reacted in an organic solvent for several hours to cause a reaction between the amino group and the carboxylic acid, so that a polymer (A) in which the polymer (a1) and the aliphatic hydrocarbon group A are bonded through an amide bond can be obtained.

### (Formation of ether bond)

In the polymer (A), the polymer (a1) and the aliphatic hydrocarbon group (a2) may be bonded through an ether bond. The ether bond in the polymer (A) may be formed, for example, by reacting the hydroxyl group-containing polymer (a1) with an aliphatic hydrocarbon group-containing alcohol. Alternatively, an acid catalyst, a base catalyst, or the like may be used during the reaction. For example, the hydroxyl group-containing polymer (a1) and an aliphatic hydrocarbon group-containing alcohol are reacted by heating under a catalyst in an organic solvent to make the aliphatic hydrocarbon group-containing alcohol function as a nucleophile, so that a polymer (A) in which the polymer (a1) and the aliphatic hydrocarbon group (a2) are bonded through an ether bond can be obtained.

### [Liquid medium]

The oil-resistant agent may contain a liquid medium. The liquid medium is water alone, an organic solvent alone, or a mixture of water and an organic solvent, preferably water alone or a mixture of water and an organic solvent.

Examples of organic solvent include an ester (e.g., an ester having 2 to 30 carbon atoms, specifically ethyl acetate and butyl acetate), a ketone (e.g., a ketone having 2 to 30 carbon atoms, specifically methyl ethyl ketone, diisobutyl ketone), an alcohol (e.g., mono- to trihydric alcohols having 1 to 30 carbon atoms, specifically isopropyl alcohol), an ether, an alkane, a toluene-type solvent, and a halocarbon. Specific examples of other solvents include acetone, isopropyl alcohol, chloroform, HCHC225, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachloro difluoroethane, trichloro trifluoroethane and a mixed solvent thereof. These may be used alone, or two or more thereof may be used in combination.

The amount of the liquid medium relative to the oil-resistant agent may be 30 wt.% or more, 50 wt.% or more, 60 wt.% or more, 75 wt.% or more, or 90 wt.% or more. The amount of the liquid medium relative to the oil-resistant agent may be 95 wt.% or less, 75 wt.% or less, or 50 wt.% or less.

In the case where the liquid medium is a mixture of water and an organic solvent, the amount of the organic solvent relative to the liquid medium may be 3 wt.% or more, 10 wt.% or more, 30 wt.% or more, 50 wt.% or more, or 75 wt.% or more. The amount of the organic solvent relative to the liquid medium may be 90 wt.% or less, 50 wt.% or less, 30 wt.% or less, or 10 wt.% or less.

### [Surfactant or dispersant]

The oil-resistant agent may contain a surfactant (emulsifier) or dispersant. In general, in order to stabilize a water dispersion of the polymer (A), for example, a surfactant or dispersant may be added in an amount of 0.01 to 100 parts by weight, 0.01 to 80 parts by weight, 0.01 to 60 parts by weight, 0.01 to 40 parts by weight, 0.01 to 30 parts by weight, or 0.01 to 15 parts by weight, relative to 100 parts by weight of the polymer (A). The surfactant or dispersant may be added during mixing of the polymer (A) powder with water, or may be added during preparation of a water dispersion by forced emulsification or phase inversion emulsification of the polymer (A).

In the oil-resistant agent, it is preferable that the surfactant contain one or more surfactants selected from a nonionic surfactant, a cationic surfactant, an anionic surfactant, and an amphoteric surfactants. It is preferable that a combination of a nonionic surfactant and a cationic surfactant be used.

For example, each of the nonionic surfactant, the cationic surfactant, and the amphoteric surfactant may include one type alone or a combination of two or more types.

Examples of the dispersant include a polymer dispersant. Examples of the polymer dispersants include a styrene/maleic anhydride copolymer, polystyrene sulfonate, polyacrylic acid, polyacrylate, polyacrylamide, an acrylamide/acrylic acid copolymer, polyvinyl alcohol, and carboxymethyl cellulose.

The amount of the surfactant or dispersant relative to 100 parts by weight of the polymer (A) may be 0.01 to 100 parts by weight, 0.01 to 80 parts by weight, 0.01 to 60 parts by weight, 0.01 to 40 parts by weight, 0.01 to 30 parts by weight, or 0.01 to 15 parts by weight. In general, addition of a surfactant or dispersant improves the stability and permeability to a textile product of the water dispersion.

### [Other additives]

The oil-resistant agent may contain other additives. Examples of the other additives include polysaccharides, a paper strengthening agent, a flocculant, a yield improver, a coagulant, a binder resin, a dispersant, a water-resistant agent, an oil-resistant agent, a water repellent, an oil repellent, a drying rate adjuster, a cross-linking agent, a film-forming aid, a compatibilizer, an anti-freezing agent, a viscosity adjuster, an ultraviolet absorber, an antioxidant, a pH adjuster, an antifoaming agent, a texture modifier, a slippage modifier, an antistatic agent, a hydrophilizing agent, an antibacterial agent, a preservative, an insect repellent, a fragrant agent, a flame retarder, a sizing agent and a paper strengthening agent. The amount of each of the other additives relative to 100 parts by weight of the polymer (A) may be 0.1 to 100 parts by weight, 0.1 to 80 parts by weight, 0.1 to 60 parts by weight, 0.1 to 40 parts by weight, 0.1 to 20 parts by weight, or 0.1 to 10 parts by weight. In particular, it is preferable that the oil-resistant agent include at least one selected from the group consisting of polysaccharides, a paper strengthening agent, a coagulant, a yield improver, and a coagulant.

Examples of the polysaccharides include starch, xanthan gum, karaya gum, welan gum, guar gum, pectin, tamarind gum, carrageenan, chitosan, gum arabic, locust bean gum, cellulose, alginic acid, agar, dextran, and pullulan. The polysaccharides may be modified polysaccharides with a substitute, and, in particular, may be modified polysaccharides into which a hydroxyl group or a cationic group is introduced.

Examples of the paper strengthening agent, flocculant, yield improver or coagulant include a styrene-type polymer (styrene/maleic acid-type polymer, styrene/acrylic acid-type polymer), a urea-formaldehyde polymer, polyethyleneimine, a melamine-formaldehyde polymer, a polyamide amine-epichlorohydrin polymer, a polyacrylamide-type polymer, a polyamine-type polymer, polydiallyl dimethylammonium chloride, an alkylamine/epichlorohydrin condensate, a condensate of alkylene dichloride and polyalkylene polyamine, a dicyandiamide/formalin condensate, a dimethyl diallyl ammonium chloride polymer, and an olefin/maleic anhydride polymer.

### [Use of oil-resistant agent]

Use of the oil-resistant agent is not limited to the use as an oil-resistant agent, but include the use as various agents such as a water-resistant agent, a water-repellent, an oil-repellent, a soil resistant agent, a soil release agent, a release agent, and a mold release agent, or as a component thereof. The oil-resistant agent can be used as an external treatment agent (surface treatment agent) or an internal treatment agent or as a component thereof.

By treating a substrate with the oil-resistant agent, the polymer (A) can form a surface coating structure on the substrate surface. The term "treating" means applying a treatment agent to a treatment target by dipping, spraying, coating, or the like. By the treating, the polymer (A), which is the active ingredient of the oil-resistant agent, permeates into the treatment target and/or adheres to the surface of the treatment target.

It is preferable that the treatment target (substrate) after treatment be dried in order to exhibit oil resistance, and for example, preferably heated at a temperature equal to or more than Tg of the copolymer, for example, 100°C to 200°C. By treating at a temperature equal to or more than Tg of the copolymer, the substrate surface is coated with the copolymer, and side chain alignment is induced. Thereby, a surface coating structure having excellent oil resistance can be formed.

The surface coating structure can be formed by applying an oil-resistant agent to a treatment target (substrate) by a conventionally known method so as to adhere the polymer (A) to the substrate surface. Usually, the oil-resistant agent is dispersed in an organic solvent or water to be diluted, and then applied to the surface of the treatment target by a known method such as dip coating, spray coating, and foam coating, following by drying. On an as needed basis, the heat-resistant agent may be applied together with a suitable cross-linking agent (for example, a blocked isocyanate compound) and cured. It is also possible to add an insect repellent, a softening agent, an antibacterial agent, a flame retarder, an antistatic agent, a paint fixing agent, a wrinkle-resistant agent, a sizing agent, a paper strengthening agent and the like to the oil-resistant agent for use in combination.

Examples of the substrate to be treated with the oil-resistant agent of the present disclosure include a textile product such as a cloth product and a paper product, a stone, a filter (e.g., electrostatic filter), a dust mask, a fuel cell part (e.g., gas diffusion electrode and gas diffusion support), glass, wood, leather, fur, asbestos, brick, cement, metal and oxide, a ceramic product, plastic, a painted surface, and plaster. Since the polymer (A) contained in the oil-resistant agent of the present disclosure adheres (physically or chemically bonds) well to a paper base, it is particularly preferable that the substrate treated with the oil-resistant agent of the present disclosure be a paper product. That is, the oil-resistant agent in the present disclosure can be suitably used as an oil-resistant agent for a paper product.

Examples of the paper product include a bleached or unbleached chemical pulp such as kraft pulp and sulfite pulp, a high yield bleached or unbleached pulp such as groundwood pulp, mechanical pulp and thermomechanical pulp, paper made of waste paper pulp of waste newspaper, waste magazine paper, waste corrugated board paper or deinked waste paper, a container made of paper, and a formed article formed of paper. Specific examples of the paper product include food packaging paper, a food container, gypsum board base paper, coating base paper, medium-quality paper, standard linerboard and fluted inner sheet, neutral pure white roll paper, neutral liner, anti-rust liner and metal interleaving paper, kraft paper, neutral printing and writing paper, neutral coating base paper, neutral PPC paper, neutral thermosensitive paper, neutral pressure sensitive base paper, neutral inkjet paper and neutral office paper and molded paper (molded container). Due to excellence in oil resistance, the oil-resistant agent of the present disclosure is suitably used for food applications (food packaging material or food container).

The oil-resistant agent can be applied to the fibrous substrate by any of the methods known for treating a textile product with a liquid. The treatment may be an external addition or an internal addition. In the case where the textile product is made of cloth, the cloth may be immersed in a solution, or a solution may be adhered or sprayed to the cloth. In the case where the textile product is made of paper, the paper may be coated, or a solution may be adhered or sprayed to the paper. Alternatively, the treatment may be performed by mixing with a pulp slurry prior to papermaking. The oil-resistant agent may be applied to a pre-formed textile (particularly paper, fabric, etc.) or may be applied to paper at various stages of papermaking, such as during drying of the paper. The oil-resistant agent may be applied to a textile product in a cleaning method, such as in a laundering application or dry-cleaning method.

Regarding the amount of the oil-resistant agent for paper in the internal addition, the solid content of the polymer (A) relative to 100 parts by weight of pulp may be 0.1 parts by weight or more, 0.5 parts by weight or more, 1 part by weight or more, 5 parts by weight or more, 10 parts by weight or more, 20 parts by weight or more, or 30 parts by weight or more. Regarding the amount of the oil-resistant agent for paper, the solid content of the polymer (A) relative to 100 parts by weight of pulp may be 80 parts by weight or less, 60 parts by weight or less, 40 parts by weight or less, 20 parts by weight or less, or 10 parts by weight or less. In the external addition, the amount of the polymer (A) contained in the oil-resistant layer may be 0.01 g/m² or more, 0.03 g/m² or more, 0.05 g/m² or more, 0.10 g/m² or more, 0.30 g/m² or more, or 0.50 g/m² or more. The amount of polymer (A) contained in the oil-resistant layer may be 5 g/m² or less, 3 g/m² or less, 2 g/m² or less, 1.5 g/m² or less, 0.30 g/m² or less, or 0.50 g/m² or less.

A polymer (A) solution (or oil-resistant agent) (concentration: 14.8 mg/mL) is applied to base paper having a paper density of 0.58 g/cm³ and a basis weight of 45 g/m² with a Baker type applicator set to 0 mil, and dried. The operation is repeated three times, and then the base paper is annealed at 70°C for 10 minutes. It is preferable that the resulting treated paper have an air permeability of 200 s/100 cc or more, 300 s/100 cc or more, 500 s/100 cc or more, 700 s/100 cc or more, or 1000 s/100 cc or more. With an air permeability of the treated paper equal to or more than the values described above, the voids between fibers are closed, and in particular, the oil resistance can be improved.

Although the embodiments have been described above, it will be understood that various changes in the embodiments and details are possible without departing from the spirit and scope of the claims.

### [Examples]

The present disclosure will be specifically described with reference to Examples as follows. However, the present disclosure is not limited these descriptions.

The test methods used below are as follows.

### [Preparation of treated paper]

A pulp slurry including LBKP (bleached broadleaf tree kraft pulp) and NBKP (bleached softwood kraft pulp) as wood pulps with weight ratios of 60 wt.% and 40 wt.%, respectively, having a pulp freeness of 400 ml (Canadian Standard Freeness) was prepared. To the pulp slurry, a wet paper strengthening agent and a sizing agent were added to make base paper having a paper density of 0.58 g/cm³ and a basis weight of 45 g/m² with a Fourdrinier paper machine to be subjected to external treatment (size pressing). The base paper had an oil resistance (KIT value) of 0 and a water resistance (Cobb value) of 52 g/m². A polymer solution including a polymer specified in the following Examples or Comparative Examples with a concentration of 14.9 mg/cm³ was applied to the base paper with a Baker type applicator with a gap set to 0 mil, and dried. The operation described above was repeated three times, and annealing was then performed at 70°C for 10 minutes, so that a treated paper was prepared.

### [KIT test (oil resistance)]

For the measurement, a 3M kit test (TAPPI T-559cm-02) was performed. In the 3M kit test method, a test oil containing castor oil, toluene, and heptane was placed on the surface of the treated paper, and after 15 seconds, the test oil was wiped off. The evaluation was performed based on the presence or absence of oil stain on the treated paper. Tests were performed using test oils of kit numbers 1 to 6, and the largest kit number causing no stain was taken as the evaluation result of oil resistance.

### [Liquid repellency (static contact angle)]

The liquid repellency was determined by spin-coating a chloroform solution of a polymer specified in the following Examples or Comparative Examples with a concentration of 1.0% onto a glass substrate with a cellophane film attached, and measuring the static contact angle. The static contact angle was obtained by dropping 2 µL of hexadecane (HD) onto the coating film and measuring the contact angle one second after droplet deposition

### [Air permeability]

The air permeability (air permeation resistance) of the treated paper was measured with an automatic Gurley-type densometer manufactured by Yasuda Seiki Seisakusho, Ltd. (Product No. 323-AUTO, vent hole diameter: 28.6±0.1 mm) in accordance with JIS P8117 (2009).

### (Example 1)

In a reaction vessel equipped with a reflux condenser and a nitrogen inlet tube, a stirrer and 0.98 g of polyvinyl alcohol (degree of saponification: 87.8 mol%, hydroxyl group content: 87.8 mol%) were placed and dried under reduced pressure at 80°C for 1 hour. Into the reaction vessel, 60 mL of toluene and 5.9 g of octadecyl isocyanate (115 mol% relative to OH of the repeating unit) were added, and the mixture was stirred at 75°C for 1 hour. Then, the temperature was returned to room temperature, and 0.1 g of dibutyltin dilaurate was added. The temperature was changed to 120°C and stirred for 20 hours. The reaction vessel was cooled to room temperature, and the reaction mixture was added dropwise to methanol to precipitate a solid. The precipitated solid was collected by suction filtration, washed once with methanol and washed once with acetone. The collected solid was reprecipitated using chloroform as a good solvent and methanol as a poor solvent to obtain a polymer including polyvinyl alcohol modified with octadecyl isocyanate. Using the polymer, the liquid repellency, KIT test, and air permeability were evaluated. The results are shown in Table 1.

### (Example 2)

The reaction and treatment were performed in the same manner as in Example 1, except that the amount of octadecyl isocyanate added was changed to 3.0 g (57 mol% relative to OH of the repeating unit) and the reaction solvent was replaced with dimethylsulfoxide. The results are shown in Table 1.

### (Example 3)

In a reaction vessel equipped with a reflux condenser and a nitrogen inlet tube, a stirrer and 0.76 g of ethylene-vinyl alcohol copolymer (ethylene content: 38 mol%, hydroxyl group content: 62 mol%) were placed and dried under reduced pressure at 80°C for 1 hour. Into the reaction vessel, 45 mL of dimethyl sulfoxide and 3.7 g of octadecyl isocyanate (100 mol% relative to OH of the repeating unit) were added, and the mixture was stirred at 75°C for 1 hour. Then, the temperature was returned to room temperature, and 0.1 g of dibutyltin dilaurate was added. The temperature was changed to 140°C and stirred for 20 hours. The reaction vessel was cooled to room temperature, and the reaction mixture was added dropwise to methanol to precipitate a solid. The precipitated solid was collected by suction filtration, washed once with methanol and washed once with acetone. The collected solid was reprecipitated using chloroform as a good solvent and methanol as a poor solvent to obtain a polymer including ethylene-vinyl alcohol copolymer modified with octadecyl isocyanate. Using the polymer, the liquid repellency, KIT test, and air permeability were evaluated. The results are shown in Table 1.

### (Example 4)

The reaction and treatment were performed in the same manner as in Example 3, except that the amount of octadecyl isocyanate added was changed to 1.8 g (50 mol% relative to OH of the repeating unit). The results are shown in Table 1.

### (Example 5)

In a reaction vessel equipped with a reflux condenser and a nitrogen inlet tube, a stirrer and 0.98 g of polyvinyl alcohol (degree of saponification: 87.8 mol%, hydroxyl group content: 87.8 mol%) were placed and dried under reduced pressure at 80°C for 1 hour. Into the reaction vessel, 30 mL of dimethyl sulfoxide was added and dissolved at 80°C, and then 6.2 g of vinyl stearate (115 mol% relative to OH of the repeating unit) and 0.002 g of sodium acetate were added, and the mixture was stirred at 80°C for 48 hours. Then, the reaction vessel was cooled to room temperature, and the reaction mixture was added dropwise to methanol to precipitate a solid. The precipitated solid was collected by suction filtration, washed once with methanol and washed once with acetone. The collected solid was reprecipitated using chloroform as a good solvent and methanol as a poor solvent to obtain a polymer including polyvinyl alcohol modified with vinyl stearate. Using the polymer, the liquid repellency, KIT test, and air permeability were evaluated. The results are shown in Table 1.

### (Example 6)

The reaction and treatment were performed in the same manner as in Example 5, except that the amount of vinyl stearate added was changed to 3.1 g (57 mol% relative to OH of the repeating unit). The results are shown in Table 1.

### (Example 7)

The reaction and treatment were performed in the same manner as in Example 5, except that polyvinyl alcohol was replaced with an ethylene-vinyl alcohol copolymer (ethylene content: 38 mol%, hydroxyl group content: 62 mol%), and the amount of vinyl stearate was changed from 6.2 g to 5.0 g (100 mol% relative to OH of the repeating unit). The results are shown in Table 1.

### (Example 8)

The reaction and treatment were performed in the same manner as in Example 5, except that polyvinyl alcohol was replaced with an ethylene-vinyl alcohol copolymer (ethylene content: 38 mol%), and the amount of vinyl stearate was changed from 6.2 g to 2.5 g (50 mol% relative to OH of the repeating unit). The results are shown in Table 1.

### (Comparative Example 1)

Using polyvinyl alcohol (degree of saponification: 87.8 mol%), the liquid repellency, KIT test, and air permeability were evaluated. The results are shown in Table 1.

**[Table 1]**

| | Bonding group | KIT (Point) | HD contact angle (°) | Permeability (s/100cc) |
|---|---|---|---|---|
| Example 1 | Urethane | 6 | 44.1 | >2000 |
| Example 2 | Urethane | 6 | 43.6 | >2000 |
| Example 3 | Urethane | 6 | 44.8 | >2000 |
| Example 4 | Urethane | 6 | 40.2 | >2000 |
| Example 5 | Ester | 5 | 40.9 | 266 |
| Example 6 | Ester | 6 | 39.6 | - |
| Example 7 | Ester | 5 | 39.2 | - |
| Example 8 | Ester | 6 | 36.2 | - |
| Comparative Example 1 | - | 1 | 7.1 | - |

## Claims

1. An oil-resistant agent comprising a polymer (A) in which a polymer (a1) having at least one selected from the group consisting of a hydroxyl group and an amino group is modified with an aliphatic hydrocarbon group having 1 to 40 carbon atoms (a2).

2. The oil-resistant agent according to claim 1, wherein the aliphatic hydrocarbon group (a2) has 7 or more carbon atoms.

3. The oil-resistant agent according to claim 1 or 2, wherein the polymer (a1) and the aliphatic hydrocarbon group (a2) are bonded through at least one bond selected from the group consisting of a urethane bond, a urea bond, an ester bond, an amide bond, and an ether bond.

4. The oil-resistant agent according to any one of claims 1 to 3, wherein the polymer (a1) is at least one selected from the group consisting of polyvinyl alcohol, an ethylene-vinyl alcohol copolymer, a vinyl acetate-vinyl alcohol copolymer, an ethylene-vinyl acetate-vinyl alcohol copolymer, polyvinyl amine, and a vinylamine-vinyl alcohol copolymer.

5. The oil-resistant agent according to any one of claims 1 to 4, wherein a total amount of vinyl alcohol units and vinylamine units in all repeating units of the polymer (a1) is 40 mol% or more.

6. The oil-resistant agent according to any one of claims 1 to 5, wherein a ratio of modification of the polymer (A) with the aliphatic hydrocarbon group (a2) is 25 mol% or more and 100 mol% or less relative to a total amount of hydroxyl groups and amino groups of the polymer (a1) .

7. The oil-resistant agent according to any one of claims 1 to 6, wherein the polymer (A) is a non-fluorine polymer.

8. The oil-resistant agent according to any one of claims 1 to 7, further comprising water, an organic solvent, or a mixture of water and an organic solvent, and being a dispersion or solution.

9. The oil-resistant agent according to any one of claims 1 to 8, further comprising at least one selected from a polysaccharide, a paper strengthening agent, a flocculant, a yield improver, and a coagulant.

10. The oil-resistant agent according to any one of claims 1 to 9, which is used for a paper product.

11. The oil-resistant agent according to claim 10, wherein the paper product is a food packaging material or a food container.

12. A paper product treated with the oil-resistant agent according to any one of claims 1 to 11.

13. The paper product according to claim 12, which is a food packaging material or a food container.

14. An oil-resistant agent comprising a polymer (A) in which a polymer (a1) having at least one selected from the group consisting of a hydroxyl group and an amino group is modified with an aliphatic hydrocarbon group having 1 to 40 carbon atoms (a2), wherein the polymer (a1) and the aliphatic hydrocarbon group (a2) are bonded through an ester bond.
